# EUROPÄISCHE PATENTSCHRIFT

(11) **EP 2 246 278 B1**
(45) Veröffentlichungstag und Bekanntmachung des Hinweises auf die Patenterteilung: **26.11.2014**
(21) Anmeldenummer: 10157071.1
(22) Anmeldetag: 19.03.2010
(51) Int. Cl.: B65G 47/71, B65G 47/82, B07C 5/34

(54) **Vorrichtung und Verfahren zum Ausleiten von Objekten von einer sich bewegenden Transporteinrichtung**
Device and method for diverting objects from a moving transport device
Dispositif et procédé pour dévier des objets se déplaçant sur un tranporteur

(30) Priorität: 29.04.2009 DE 102009003847
(43) Veröffentlichungstag der Anmeldung: 03.11.2010
(60) Teilanmeldung: 14178876.0
(73) Patentinhaber: Krones AG, 93073 Neutraubling (DE)
(72) Erfinder: Gut, Thorsten, 93073, Neutraubling (DE)
(74) Vertreter: Benninger, Johannes

(56) Entgegenhaltungen:
- WO-A2-02/26602
- DE-A1- 19 532 306
- DE-A1-102005 021 109
- DE-U1-202007 013 933
- GB-A- 2 174 667

## Beschreibung

Die Erfindung betrifft eine Vorrichtung zum Ausleiten von Objekten von einer sich bewegenden Transporteinrichtung mit den Merkmalen des Oberbegriffs des unabhängigen Anspruchs 1. Die Erfindung betrifft weiterhin ein entsprechendes Verfahren zum Ausleiten von Objekten von einer bewegten Transporteinrichtung mit den Merkmalen des Oberbegriffs des unabhängigen Verfahrensanspruchs 5.

Bei Flaschenabfüllanlagen und Transporteinrichtungen für Flaschen sind Vorkehrungen notwendig, um fehlerhafte und/oder beschädigte Flaschen aus einem kontinuierlichen Förderstrom auszusondern. Es sind bereits verschiedene Systeme zum Ausleiten von fehlerhaften Falschen aus einem kontinuierlichen Flaschenstrom bekannt. Hierzu werden Schiebereinrichtungen, sog. "Pusher", verwendet, welche die fehlerhaften Flaschen in seitlicher Richtung aus dem Flaschenstrom schieben. Diese Pusher werden üblicherweise mit Druckluft betrieben, was den unerwünschten Effekt mit sich bringt, dass bei einem Wechsel der in der Anlage transportierten Flaschen der Arbeitsdruck an die neue Flaschensorte angepasst werden muss; ebenso ist auch die Zustellung zum Band manuell zu korrigieren.

Dieses Prinzip ist bereits schon sehr lange bekannt und als Stand der Technik zu werten, weist aber den Nachteil auf, dass die Modulierbarkeit und Steuerbarkeit dieser pneumatischen Schiebereinrichtungen stark eingeschränkt ist. Eine manuelle Anpassung der Steuerparameter und/oder der Auslösezeitpunkte und/oder der Positionen des Schiebers an veränderte Gegebenheiten wie bspw. unterschiedlichen Flaschengrößen und/oder Füllgraden der transportierten Flaschen ist hierbei unumgänglich.

Die DE 20,2007 013 993 U1 offenbart eine Vorrichtung zum Ausleiten von Objekten nach dem Oberbegriff des Anspruchs 1, bei welcher mittels eines Schiebers Behälter, die auf einem sich bewegenden Zwischenförderabschnitt transportiert werden, gruppenweise auf mehrere, sich am Ende des Zwischenförderabschnitts anschließende Abführstrecken verteilt werden. Die mehreren Abführstrecken führen die Behälter zur Herstellung von Gebinden in Richtung einer Verpackungsstation.

Aus der DE 10 2005 021 109 A1 ist weiter ein System bekannt, bei welchem fehlerhafte Produkte mittels eines Stempels in einen neben eine Transportvorrichtung für die Artikel angeordneten Container geschoben werden können. Fehlerhafte Produkte werden über eine Sensorik erkannt.

Ein Ziel der vorliegenden Erfindung besteht darin, ein Ausleitsystem zur Verfügung zu stellen, bei welchem die Steuerparameter für die Ausleiteinrichtung besser und schneller an verschiedene Erfordernisse angepasst werden können.

Dieses Ziel der Erfindung wird mit den Gegenständen der unabhängigen Ansprüche erreicht. Merkmale vorteilhafter Weiterbildungen der Erfindung ergeben sich aus den abhängigen Ansprüchen.

Die Erfindung umfasst ein System zum Ausleiten von Objekten, die insbesondere durch Getränkebehälter, Flaschen oder dgl. gebildet werden. Diese Ausleitung kann von einer sich bewegenden Transporteinrichtung mit darauf aufeinander folgenden stehenden Objekten erfolgen. Zudem dient eine Ausleiteinrichtung zum geschobenen Ausleiten von den ausgewählten Objekten. Ausgewählte Objekte sind bspw. Flaschen, Behälter oder dgl., welche einen Fehler oder eine Verschmutzung aufweisen.

Der Vorgang des Ausleitens von ausgewählten Objekten kann senkrecht oder schräg zu einer Förderrichtung der Transporteinrichtung stattfinden. Die Ausleiteinrichtung erfolgt in Abhängigkeit einer übergeordneten Steuerung, die die ausgewählten Objekte auf eine oder mehrere Bahnen verteilt.

Die Ausleiteinrichtung wird gemäß der vorliegenden Erfindung durch einen als Schieber ausgebildeten positionsgeregelten Linearantrieb gebildet, der die ausgewählten Objekte seitlich von einer Fördereinrichtung auf eine einzige oder auf eine von mehreren Ausleitbahnen schiebt. Eine mögliche Ausleitbahn kann bspw. ein Transportband sein, welches die Objekte wieder zu einer Reinigungsmaschine zurückführt. Die Rückführung von Objekten erfolgt bspw. dann, wenn Verschmutzungen in den Objekten festgestellt werden. Eine weitere Ausleitbahn kann bspw. als ein Transportband ausgebildet sein, welches die Objekte in einen unter dem Transportband aufgestellten Container weiterleitet. Dieser Container sammelt bspw. die Objekte auf, die nicht mehr für eine Weiterbehandlung zu gebrauchen sind. Des Weiteren können die Ausleitbahnen Auswurfschächte umfassen.

Bei dem positionsgeregelten Linearantrieb erfolgen die Kraftübertragung und die Krafterzeugung einheitlich. Daher besitzen sie gegenüber getriebebasierten Konzepten Vorteile im Bereich der Positioniergenauigkeit und Dynamik. Zudem umfasst der positionsgeregelten Linearantrieb einen elektrischen Linearmotor, der eine integrierte Positionskontrolle eingebaut hat und durch ein Leitsystem parametrisiert werden kann. D.h. der Linearantrieb bzw. der elektrische Linearmotor ist mit einer Steuereinrichtung gekoppelt, mit der verschiedene Bewegungsparameter des Antriebs vorgebbar sind.

Die Kraft der Ausleitvorrichtung, mit der die ausgewählten Objekte von der Transporteinrichtung geschoben werden, liegt in Abhängigkeit des zu erwartenden Widerstandes der ausgewählten Objekte, das heißt Gewichts- oder Schwerpunktsparametern. Die Kraft des Ausstoßes kann von Objekt zu Objekt unterschiedlich sein und muss dementsprechend angepasst werden. Als Beispiel kann eine Leerflascheninspektion erwähnt werden, bei der verschmutzte oder beschädigte Objekte von der Transporteinrichtung ausgeleitet werden müssen. Die verschmutzten Objekte sind mit der für ihr Leergewicht notwendige Energie zu beaufschlagen, währenddessen Objekte mit Restbeständen, bspw. mit einer verbleibenden Reinigungslauge, ungefähr ein doppelt so hohes Gewicht aufweisen und somit zum Ausleiten mit einer größeren Kraft beaufschlagt werden müssen. Ähnlich ist der Sachverhalt bei befüllten. Bei einer Füllhöhenkontrolle, die einer Füllmaschine nachgeschalten ist, werden ebenso unbefriedigend gefüllte Objekte ausgeleitet. Auch hier weisen Objekte, die nur halb befüllt sind, weniger Gewicht auf, als Objekte, die ihre optimale Füllhöhe annährend erreicht haben.

Grundsätzlich können bei der Einrichtung der Objekte die optimalen Parameter für eine stehende Ausleitung eingestellt werden. Bspw. können mit der Steuereinrichtung ein Hub, eine Hubgeschwindigkeit und/oder eine Beschleunigung des Antriebs für die Ausscheidung der Objekte in gewünschter Weise gesteuert werden. Die Parameter hierzu werden zuvor in die Steuereinrichtung eingegeben. Allerdings sind während einer Hubbewegung die Steuerparameter des Antriebs wahlweise variierbar. Des Weiteren kann eine absolute Nullposition des Antriebs zum Band und relativ zu den Objekten eingestellt werden.

Für die Einstellung der Antriebsbeschleunigung können verschiedene Parametersätze in der Steuereinrichtung angelegt werden. Diese Parametersätze sind vom Objektzustand abhängig; bspw. kann als erster Parametersatz eine Füllhöhenkontrolle angelegt werden. Wird bei dieser Füllhöhenkontrolle eine zu niedrige Füllung oder eine zu hohe Füllung eines Objekts erkannt, dann soll dieses Objekt über die Ausleiteinrichtung ausgeschieden werden. Ein weiterer Parametersatz könnte darin bestehen, Objekte ohne oder mit zu geringer Füllung nach Vorgabe des entsprechenden Parametersatzes durch die Ausleiteinrichtung auszuscheiden.

Die benötigten Parameter für die Füllhöhenkontrolle können mit einem Sensor ermittelt werden, der mit der Steuereinrichtung gekoppelt ist und ein Signal an die Ausleiteinrichtung gibt, wenn ein Parametersatz ausgelöst wird. Des Weiteren kann der Sensor zur Erfassung von Gewichts- und/oder Schwerpunktsparametern der Objekte dienen, der ebenfalls die Werte an die Steuereinrichtung weiterleitet. Der Sensor kann bspw. durch eine Kamera oder eine andere optische Erfassungseinrichtung gebildet werden. Mit der Kamera als Sensor kann auf einfache Weise die Füllhöhenkontrolle für die Ausscheidung erfolgen. Hierzu wird der Füllzustand der Objekte ermittelt. Ist der Füllzustand eines Objekts voll, halbvoll oder leer, wird je nach Parametersatz ausgeschieden. Diese Parametersätze werden sortenspezifisch in der Steuereinrichtung eingestellt.

Der Linearantrieb ist vor einer Inbetriebnahme und/oder während eines laufenden Betriebs initialisierbar; d.h. tritt ein Schleppfehler des Linearmotors auf, kann dieser im laufenden Betrieb in seiner Position verstellt werden. Unter Schleppfehler ist im vorliegenden Zusammenhang ein Fehler zu verstehen, der zwischen Positionssoll- und Positionsistwert aufgrund einer Geschwindigkeit verursacht wird. Damit ist gemeint, dass ein Istwert des Schiebers dem Positionssollwert hinterherläuft. Dieser Schleppfehler ist bspw. anhand einer Abweichung bzw. einer Unregelmäßigkeit einer Positions-Istwertkurve in einem Steuerungsdiagramm, welches die Ist- und Sollwerte anzeigt, erkennbar. Durch Vergrößerung des Geschwindigkeitsverstärkungsfaktors kann der Schleppfehler wieder verkleinert werden.

Die Positionsverstellung des Linearantriebs ist von der Steuereinrichtung in Abhängigkeit von den erfassten Sensorwerten hinsichtlich gewichts- und/oder schwerpunkts- und/oder größenabhängiger Parameter der Objekte steuerbar. Wird ein neuer Objekttyp in die Transporteinrichtung geladen, so erfolgt eine automatische Anpassung der horizontalen Position des Antriebs zum Objekt.

Neben der Vorrichtung umfasst die Erfindung gleichermaßen ein Verfahren zum Ausleiten von Objekten. Die Ausleitung erfolgt in einer sich bewegenden Transporteinrichtung mit darauf aufeinander folgend stehenden Objekten. Die ausgewählten Objekte werden mittels einer Ausleiteinrichtung zum Ausleiten senkrecht oder schräg zu einer Förderrichtung der Transporteinrichtung geschoben. Die Ausleitung der ausgewählten Objekte erfolgt somit über einen positionsgeregelten Linearantrieb, der durch einen positionsgeregelten elektrischen Linearmotor gebildet wird. Dieser Linearantrieb bzw. der elektrische Linearmotor wird von einer Steuereinrichtung zur Vorgabe verschiedener Bewegungsparameter des Antriebs angesteuert.

Der Antrieb wird durch die Steuereinrichtung gesteuert, die einen Hub, eine Hubgeschwindigkeit und/oder eine Beschleunigung steuert. Die Steuerparameter während der Hubbewegung des Antriebs können variiert werden. Erfindungsgemäß wird der Antrieb in Abhängigkeit von Gewichts- und/oder Schwerpunktsparametern der Objekte angesteuert, zudem kann der Linearantrieb vor einer Inbetriebnahme und/oder während eines laufenden Betriebs initialisiert werden.

Durch eine Schleppfehlererkennung des Linearantriebs kann dieser im laufenden Betrieb in seiner Position verstellt werden. Die Positionsverstellung wird von der Steuereinrichtung in Abhängigkeit von den erfassten Sensorwerten hinsichtlich gewichts- und/oder schwerpunkts- und/oder größenabhängiger Parameter der Objekte gesteuert.

Im Verfahren zum Ausscheiden von Objekten werden diese durch Getränkebehälter bzw. -flaschen gebildet, die mittels des als Schieber ausgebildeten positionsgeregelten Linearantriebs seitlich von einer Fördereinrichtung auf eine oder mehrere Ausleitbahnen geschoben werden.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügte Zeichnung Bezug nimmt.

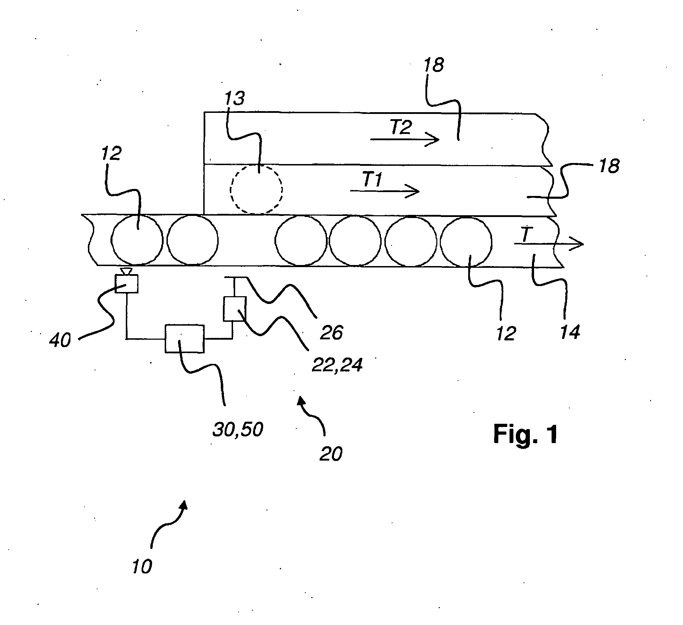

Die einzige Fig. 1 zeigt eine schematische Darstellung einer Vorrichtung zum Ausleiten von Objekten.

Die schematische Darstellung der Fig. 1 zeigt ein Ausführungsbeispiel einer erfindungsgemäßen Vorrichtung 10 zum Ausleiten von Objekten 12. Diese Objekte 12 können insbesondere durch Flaschen o. dgl. gebildet sein. Die Vorrichtung 10 setzt sich im vorliegenden Ausführungsbeispiel aus insgesamt drei Transportbändern 14, 18 zusammen. Eine Transporteinrichtung 14 sorgt dafür, dass die Objekte 12 aufrecht stehend an einem Sensor 40 vorbeibewegt werden. Dieser Sensor 40 erkennt die Sorte der Objekte 12 und übermittelt die Daten dieser Sorte an eine Steuereinrichtung 30.

Erkennt der Sensor 40 bei einer Füllhöhenkontrolle, dass die Objekte 12 nur halbvoll statt voll gefüllt sind, so wird ein Signal an die Ausleiteinrichtung 20 übertragen. Diese Signalübertragung erfolgt über die Steuereinrichtung 30, die mit einem Linearantrieb 22 in Wirkverbindung steht. Der Linearantrieb 22 weist einen positionsgeregelten elektrischen Linearmotor 24 auf. Die verschiedenen Bewegungsparameter des Linearantriebs 22 werden zuvor gespeichert, so dass der Linearmotor 24 diejenigen Steuerbefehle ausführen kann, die er von der Steuereinrichtung 30 übermittelt bekommt.

Die fehlerhaften Objekte 12 werden nach der Übermittlung des Signals von der Steuereinrichtung 30 über einen Schieber 26 ausgeschieden. Der Schieber 26 wird über den positionsgeregelten Linearantriebs 22 angetrieben und kann die fehlerhaften Objekte 13 über eine oder mehrere nebeneinander angeordneten Ausleitbahnen 18 ausscheiden. Neben der eigentlichen Transporteinrichtung 14, die die Objekte 12 in Richtung der Weiterbehandlung T transportiert, leiten die daneben angeordneten Ausleitbahnen 18 die fehlerhaften Objekte 13 entweder zur Entsorgung T1 oder auf ein Transportband zum Rücklauf T2.

Auf das Transportband zum Rücklauf T2 werden fehlerhafte Objekte 13 ausgeschieden, die bspw. in eine Reinigungsmaschine zurückgeführt werden sollen. Dieses Transportband des Rücklaufs T2 ist in der Figur 1 die zweite Ausleitbahn 18, die neben dem Transportband zur Entsorgung T1 angeordnet, welches wiederum neben der Transporteinrichtung 14 angeordnet ist. Diese parallele Anordnung der Ausleitbahnen 18 ist nur als eines von mehreren möglichen Ausführungsbeispielen zu betrachten. Es ist durchaus denkbar, dass nur eine einzige oder auch mehr als zwei Ausleitbahnen 18 vorhanden sind.

Grundsätzlich ist es sinnvoll, bei der Einrichtung der Objekte 12 die optimalen Parameter für eine stehende Ausleitung in der Steuereinrichtung 30 einzustellen. So können bspw. für die Beschleunigung verschiedene flaschenzustandsabhängige Parametersätze in der Steuereinrichtung 30 angelegt sein. Diese Parameter werden zudem sortenspezifisch gespeichert. Da unterschiedliche Objekt- oder Flaschengrößen jeweils unterschiedliche Schwerpunktpositionen aufweisen können, benötigen sie für eine störungsfreie Ausleitung entsprechend angepasste Einstellungen des Schiebers 26. Zudem kann es notwendig sein, schwerere Objekte mit anderen Steuerparametern auf die Ausleitbahnen 18 zu befördern als leichtere Objekte. Im Zusammenhang mit der Erkennung des Füllstandes mittels des Sensors 40 können diese Parameter durch weitere gewichtsorientierte und/oder schwerpunktsorientierte Parameter überlagert werden.

Erst die Verwendung eines elektrischen Linearmotors 24 als Schieberantrieb ermöglicht die passgenaue Überführung der fehlerhaften Objekte 13 auf eines der gewünschten Ausleitbänder 18. Die im Stand der Technik verwendeten pneumatisch angetriebenen Schieber ermöglichen dagegen nur eine relativ grobe Positionierung bei der Ausleitung, da kein positionsgeregelter Antrieb zur Verfügung steht.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 10: Vorrichtung
- 12: Objekte
- 13: fehlerhafte Objekte
- 14: Transporteinrichtung
- 18: Ausleitbahnen
- 20: Ausleiteinrichtung
- 22: Linearantrieb
- 24: Linearmotor
- 26: Schieber
- 30: Steuereinrichtung
- 40: Sensor
- T: Transportband zur Weiterbehandlung
- T1: Transportband zur Entsorgung
- T2: Transportband zum Rücklauf

## Patentansprüche

1. Vorrichtung (10) zum Ausleiten von Objekten (12) von einer sich bewegenden Transporteinrichtung (14) mit darauf aufeinander folgend stehenden Objekten (12), mit einer Ausleiteinrichtung (20) zum geschobenen Ausleiten von ausgewählten Objekten (12) senkrecht oder schräg zu einer Förderrichtung der Transporteinrichtung (14), wobei die Ausleiteinrichtung (20) durch einen positionsgeregelten Linearantrieb (22) gebildet ist, und wobei der Linearantrieb (22) mit einer Steuereinrichtung (30) gekoppelt ist, mit der verschiedene Bewegungsparameter des Antriebs (22) vorgebbar sind, **dadurch gekennzeichnet, dass** die Steuereinrichtung (30) mit einem Sensor (40) zur Erfassung von Gewichts- und/oder Schwerpunktsparametern der Objekte (12) gekoppelt ist.

2. Vorrichtung nach Anspruch 1, bei welcher der Linearantrieb (22) einen positionsgeregelten elektrischen Linearmotor (24) umfasst.

3. Vorrichtung nach Anspruch 1 oder 2, bei welcher der Linearantrieb (22) im laufenden Betrieb in seiner Position verstellbar ist.

4. Vorrichtung nach einem der Ansprüche 1 bis 3, bei der die Objekte (12) durch Getränkebehälter bzw. -flaschen gebildet sind, die mittels des als Schieber (26) ausgebildeten positionsgeregelten Linearantriebs (22) seitlich von einer Fördereinrichtung auf eine oder mehrere Ausleitbahnen (18) schiebbar sind.

5. Verfahren zum Ausleiten von Objekten (12) von einer sich bewegenden Transporteinrichtung (14) mit darauf aufeinander folgend stehenden Objekten (12) mittels einer Ausleiteinrichtung (20) zum geschobenen Ausleiten von ausgewählten Objekten (12) senkrecht oder schräg zu einer Förderrichtung der Transporteinrichtung (14), wobei Objekte (12) mit einem positionsgeregelten Linearantrieb (22) ausgeleitet werden und der Linearantrieb (22) von einer Steuereinrichtung (30) zur Vorgabe verschiedener Bewegungsparameter des Antriebs (22) angesteuert wird, **dadurch gekennzeichnet, dass** der Antrieb (22) in Abhängigkeit von Gewichts- und/oder Schwerpunktsparametern der Objekte (12) angesteuert wird.

6. Verfahren nach Anspruch 5, bei dem die Steuereinrichtung (30) einen Hub, eine Hubgeschwindigkeit und/oder eine Beschleunigung des Antriebs (22) steuert.

7. Verfahren nach Anspruch 5 oder 6, bei dem die Steuerparameter während der Hubbewegung des Antriebs (22) variiert werden können.

8. Verfahren nach einem der Ansprüche 5 bis 7, bei dem der Linearantrieb (22) vor einer Inbetriebnahme und/oder während eines laufenden Betriebs initialisiert wird.

9. Verfahren nach einem der Ansprüche 5 bis 8, mit einer Schleppfehlererkennung des Linearantriebs (22).

10. Verfahren nach einem der Ansprüche 5 bis 9, bei dem eine Positionsverstellung des Linearantriebs (22) mittels der Steuereinrichtung (30) in Abhängigkeit von erfassten Sensorwerten hinsichtlich gewichts- und/oder schwerpunkts- und/oder größenabhängiger Parameter der Objekte (12) erfolgt.

11. Verfahren nach einem der Ansprüche 5 bis 10, bei dem die Objekte (12) durch Getränkebehälter bzw. -flaschen gebildet werden, die mittels des als Schieber (26) ausgebildeten positionsgeregelten Linearantriebs (22) seitlich von einer Fördereinrichtung auf eine oder mehrere Ausleitbahnen (18) geschoben werden können.

## Claims

1. An apparatus (10) for discharging objects (12) from a moving transportation device (14) having consecutive, standing objects (12) thereon, with a discharging device (20) for the sliding discharge of selected objects (12) perpendicular or diagonal to a conveying direction of the transportation device (14) wherein the discharging device (20) is formed by a position-controlled linear drive (22) and wherein the linear drive is coupled with a control device (30), which is predefineable with respect to different movement parameters of the drive (22), **characterized in that** the control device (22) is coupled with a sensor (40) for detecting weight parameters and/or gravity center parameters of the objects (12).

2. The apparatus as recited in claim 1 wherein the linear drive (22) comprises a position-controlled electric linear motor (24).

3. The apparatus as recited in claim 1 or 2 wherein the linear motor (22) is adjustable in its position during ongoing operation.

4. The apparatus as recited in one of the claims 1 to 3 wherein the objects (12) are formed by beverage containers or beverage bottles, which can be laterally pushed from a conveying device onto one or several discharge tracks (18) by means of the position-controlled linear drive (22) taking the form of a slider (26).

5. A method for discharging objects (12) from a moving transportation device (14) having consecutive, standing objects (12) thereon, said discharging effected by means of a discharging device (20) for the sliding discharge of selected objects (12) perpendicular or diagonal to a conveying direction of the transportation device (14) wherein objects (12) are discharged by a position-controlled linear drive (22) and wherein the linear drive is controlled by a control device (30) for predefining different movement parameters of the drive (22), **characterized in that** the drive (22) is controlled in dependence on weight parameters and/or gravity center parameters of the objects (12).

6. The method as recited in claim 5 wherein the control device (30) controls a stroke, a stroke speed, and/or an acceleration of the drive (22).

7. The method as recited in claim 5 or 6 wherein the control parameters can be varied during the stroke movement of the drive (22).

8. The method as recited in one of the claims 5 to 7 wherein the linear drive (22) is initialized prior to starting and/or during ongoing operation.

9. The method as recited in one of the claims 5 to 8 with a tracking error detection of the linear drive (22).

10. The method as recited in one of the claims 5 to 9 wherein a position adjustment of the linear drive (22) is carried out by means of the control device (30) in dependence on detected sensor values relating to weight parameters and/or gravity center parameters and/or size parameters of the objects (12).

11. The method as recited in one of the claims 5 to 10 wherein the objects (12) are formed by beverage containers or beverage bottles, which can be laterally pushed from a conveying device onto one or several discharge tracks (18) by means of the position-controlled linear drive (22) taking the form of a slider (26).

## Revendications

1. Dispositif (10) destiné à dévier des objets (12) d'un dispositif de transport (14) en mouvement, avec des objets (12) placés successivement sur celui-ci, comprenant un dispositif de déviation (20) pour dévier des objets (12) sélectionnés de manière poussée verticalement ou en biais par rapport à une direction de transport dudit dispositif de transport (14), ledit dispositif de déviation (20) étant constitué par un mécanisme d'entraînement linéaire (22) à position réglée, et ledit mécanisme d'entraînement linéaire (22) étant couplé à un dispositif de commande (30) permettant de donner des paramètres de mouvement différents du mécanisme d'entraînement (22), **caractérisé par le fait que** ledit dispositif de commande (30) est couplé à un capteur (40) de détection de paramètres de poids et/ou de centre de gravité desdits objets (12).

2. Dispositif selon la revendication 1, dans lequel ledit mécanisme d'entraînement linéaire (22) comprend un moteur linéaire électrique (24) à position réglée.

3. Dispositif selon la revendication 1 ou 2, dans lequel ledit mécanisme d'entraînement linéaire (22) peut être réglé en position pendant le fonctionnement en cours.

4. Dispositif selon l'une quelconque des revendications 1 à 3, dans lequel lesdits objets (12) sont formés par des récipients ou bien bouteilles de boisson qui peuvent être poussés latéralement depuis un dispositif de transport sur une ou plusieurs voies de déviation (18) au moyen dudit mécanisme d'entraînement linéaire (22) à position réglée qui est réalisé en tant que poussoir (26).

5. Procédé destiné à dévier des objets (12) d'un dispositif de transport (14) en mouvement, avec des objets (12) placés successivement sur celui-ci, au moyen d'un dispositif de déviation (20) pour dévier des objets (12) sélectionnés de manière poussée verticalement ou en biais par rapport à une direction de transport dudit dispositif de transport (14), lesdits objets (12) étant déviés par un mécanisme d'entraînement linéaire (22) à position réglée, et ledit mécanisme d'entraînement linéaire (22) étant commandé par un dispositif de commande (30) destiné à donner des paramètres de mouvement différents du mécanisme d'entraînement (22), **caractérisé par le fait que** ledit mécanisme d'entraînement (22) est commandé en fonction de paramètres de poids et/ou de centre de gravité desdits objets (12).

6. Procédé selon la revendication 5, dans lequel ledit dispositif de commande (30) commande une course, une vitesse de la course et/ou une accélération du mécanisme d'entraînement (22).

7. Procédé selon la revendication 5 ou 6, dans lequel les paramètres de commande peuvent être variés durant le mouvement de course du mécanisme d'entraînement (22).

8. Procédé selon l'une quelconque des revendications 5 à 7, dans lequel ledit mécanisme d'entraînement linéaire (22) est initialisé avant une mise en service et/ou pendant le fonctionnement en cours.

9. Procédé selon l'une quelconque des revendications 5 à 8, comprenant une détection d'erreur de poursuite du mécanisme d'entraînement linéaire (22).

10. Procédé selon l'une quelconque des revendications 5 à 9, dans lequel un réglage de position du mécanisme d'entraînement linéaire (22) est réalisé au moyen du dispositif de commande (30) en fonction de valeurs de capteur saisies, à l'égard de paramètres dépendant du poids et/ou du centre de gravité et/ou de la taille desdits objets (12).

11. Procédé selon l'une quelconque des revendications 5 à 10, dans lequel les objets (12) sont formés par des récipients ou bien bouteilles de boisson qui peuvent être poussés latéralement depuis un dispositif de transport sur une ou plusieurs voies de déviation (18) au moyen dudit mécanisme d'entraînement linéaire (22) à position réglée qui est réalisé en tant que poussoir (26).
